# EUROPEAN PATENT APPLICATION

(11) **EP 4 583 428 A1**
(43) Date of publication of application: **09.07.2025**
(21) Application number: 23869667.8
(22) Date of filing: 25.05.2023
(51) Int. Cl.: H04B 10/25, H04J 3/16

(54) **SERVICE TRANSMISSION METHOD, AND DEVICE AND MEDIUM**

(30) Priority: 30.09.2022 CN 202211209770
(71) Applicant: ZTE CORPORATION, Shenzhen, Guangdong 518057 (CN)
(72) Inventor: ZHANG, Yuanbin, Shenzhen, Guangdong 518057 (CN); YUAN, Yan, Shenzhen, Guangdong 518057 (CN)
(74) Representative: Canzler & Bergmeier Patentanwälte Partnerschaft mbB
(86) International application number: PCT/CN2023/096291
(87) International publication number: WO 2024/066414

(57) **Abstract**

Provided in the present disclosure is a service transmission method, comprising: mapping a client service to an optical service unit; mapping the optical service unit to a serving-layer optical data unit; processing the serving-layer optical data unit according to a first preset rule, so as to obtain data to be transmitted; and sending the data to be transmitted. Further provided in the present disclosure are an electronic device and a computer-readable medium.

## Description

### TECHNICAL FIELD

The present disclosure relates to the technical field of communications, and particularly relates to a service transmission method, an electronic device, and a computer-readable medium.

### BACKGROUND

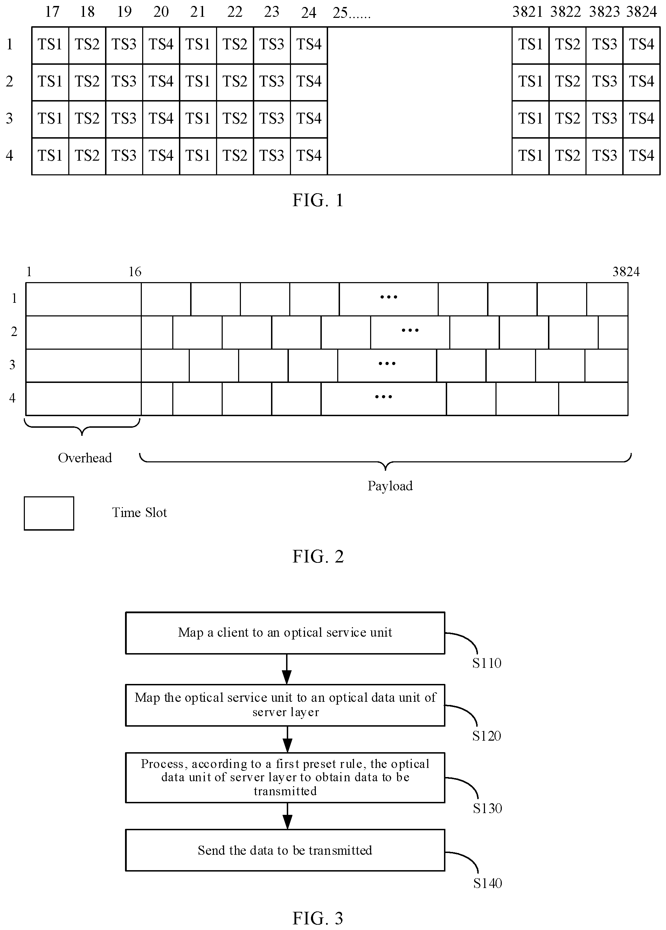

In the definition of the existing optical transport network (OTN), a method for loading a plurality of service signals into a payload of an optical transport network signal is dividing the payload of the optical transport network signal into n time slots (TSs), as shown in FIG. 1. The service signals are then loaded into one or more time slots in the payload of the optical transport network signal, where each time slot is implemented in a byte interpolation manner.

An Synchronous Transfer Module-1 (STM-1, i.e., a synchronous transport module with a rate of 155.520 Mbps) and an Optical Data Unit (ODU) each use three 0xF6 and three 0x28 as a frame header indication signal, and an STM-1 service may be mapped to ODUO by means of a Generic Mapping Procedure (GMP), and ODUO is further multiplexed into a higher-order ODU. For a higher-order ODU signal of ODU4 or below, time slots are interleaved based on a single byte, and the frame header indication signal of STM-1 in the payload of ODUO will also be dispersed in the higher-order ODU, resulting in a relatively low probability of continuous storage. For B100G OTN, a Completely standardized Optical Transport Unit-Cn (OTUC) frame structure based on 16-byte time slot interleaving is used, and although the frame header indication signal of STM-1 in the payload of ODUO may continuously appear in the OTUC payload, one OTUC can carry 10 ODUO signals at most, which is a relatively small amount and may cause certain influence on OTUC framing.

One research focus in the industry is to carry fine-grained services by an Optical Service Unit (OSU), divide a payload area of an OTN frame by large-byte time slots, as shown in FIG. 2, and map the OSU into time slots of the OTN frame, where the time slot has a length of at least 16 bytes, with each frame header indication signal greater than 6 bytes. The OSU is carried in the ODU before passing through the optical interface, and a rate of the OSU is mainly below 1G, which includes two major categories, i.e., Constant Bit Rate (CBR) services and Packet (PKT) services. One ODU may carry k levels of OSUs. However, this method has the problems of an extended framing time of an ODU of server layer or the like.

### SUMMARY

An embodiment of the present disclosure provides a service transmission method, an electronic device, and a computer-readable medium.

As a first aspect of the present disclosure, there is provided a service transmission method, including: mapping a client to an optical service unit; mapping the optical service unit to an optical data unit of server layer; processing, according to a first preset rule, the optical data unit of server layer to generate data to be transmitted; and sending the data to be transmitted.

Optionally, a payload area of the optical data unit of server layer is divided into a fixed number of time slots with an interleaving granularity of N bytes, and N is a positive integer greater than 1.

Optionally, processing, according to the first preset rule, the optical data unit of server layer includes: processing, according to the first preset rule, a payload area of the optical data unit of server layer.

Optionally, processing, according to the first preset rule, the payload area of the optical data unit of server layer includes: scrambling, according to a predetermined generating polynomial, the payload area of the optical data unit of server layer.

Optionally, processing, according to the first preset rule, the payload area of the optical data unit of server layer includes: flipping each bit in the payload area of the optical data unit of server layer.

As a second aspect of the present disclosure, there is provided a service transmission method, including: mapping a client to an optical service unit; processing, according to a second preset rule, the optical service unit; mapping the optical service unit processed according to the second preset rule into an optical data unit of server layer to generate data to be transmitted; and sending the data to be transmitted.

Optionally, processing, according to the second preset rule, the optical service unit includes: processing, according to the second preset rule, a payload area of the optical service unit or an area of the optical service unit excluding a frame alignment signal.

Optionally, processing, according to the second preset rule, the payload area of the optical service unit or the area of the optical service unit excluding the frame alignment signal includes: scrambling, according to a predetermined generating polynomial, the payload area of the optical service unit or the area of the optical service unit excluding the frame alignment signal.

Optionally, the optical data unit of server layer is divided into a fixed number of time slots with an interleaving granularity of N bytes, and N is a positive integer greater than 1.

As a third aspect of the present disclosure, there is provided an electronic device, including: one or more processors; and a memory having one or more programs stored thereon which, when executed by the one or more processors, cause the one or more processors to implement the service transmission method according to the first or second aspect of the present disclosure.

As a fourth aspect of the present disclosure, there is provided a computer-readable medium storing a computer program thereon which, when executed by a processor, causes the service transmission method according to the first or second aspect of the present disclosure to be implemented.

According to the service transmission method provided in the first aspect of the present disclosure, a client is mapped into an OSU which is further mapped and multiplexed into an ODU of server layer, and then the ODU of server layer is processed according to a first preset rule without adding a service frame header indication signal of the OSU into the ODU of server layer, which can avoid influencing framing of the ODU of server layer, reduce the time required by framing of the ODU of server layer, and further avoid other problems caused by the overlong framing time for ODU.

According to the service transmission method provided in the second aspect of the present disclosure, before being mapped to the ODU of server layer, the OSU is processed according to a second preset rule, and then mapped into the ODU of server layer when the processing is completed. The service transmission method provided in the second aspect also avoids the need of adding the service frame header indication signal of the OSU into the ODU of server layer, which can avoid influencing framing of the ODU of server layer, reduce the time required by framing of the ODU of server layer, and further avoid other problems caused by the overlong framing time for ODU.

### BRIEF DESCRIPTION OF DRAWINGS

FIG. 1 is a schematic diagram of an implementation of dividing an OTN frame into time slots;
FIG. 2 is a schematic diagram of another implementation of dividing an OTN frame into time slots;
FIG. 3 is a flowchart of an implementation of a service transmission method according to a first aspect of the present disclosure;
FIG. 4 is a flowchart of an implementation of a service transmission method according to a second aspect of the present disclosure;
FIG. 5 is a flowchart of an implementation of a service transmission method for an intermediate node according to the present disclosure;
FIG. 6 is a schematic diagram of an implementation of an electronic device according to the present disclosure;
FIG. 7 is a schematic diagram of a computer-readable medium according to the present disclosure;
FIG. 8 is a schematic diagram of an application scenario of a first embodiment and a second embodiment of the present disclosure;
FIG. 9 is a schematic diagram showing scrambling on an ODU4 of server layer carrying an OSU;
FIG. 10 is a schematic diagram showing flipping on an ODU4 of server layer carrying an OSU; and
FIG. 11 is a schematic diagram showing scrambling on an OSU.

### DETAIL DESCRIPTION OF EMBODIMENTS

To improve understanding of the technical solutions of the present disclosure for those skilled in the art, the service transmission method, the electronic device, and the computer-readable medium of the present disclosure will be described below in detail in conjunction with the accompanying drawings.

Exemplary embodiments will be described more sufficiently below with reference to the accompanying drawings, but which may be embodied in different forms and should not be construed as limited to the embodiments set forth herein. Rather, these embodiments are provided so that the present disclosure will be thorough and complete, and will fully convey the scope of the present disclosure to those skilled in the art.

The embodiments of the present disclosure and features thereof may be combined with each other as long as they are not contradictory.

As used herein, the term "and/or" includes any and all combinations of one or more of the associated listed items.

The terminology used herein is for the purpose of describing specific embodiments only and is not intended to limit the present disclosure. As used herein, the singular forms "a", "an" and "the" are intended to include the plural forms as well, unless the context clearly indicates otherwise. It will be further understood that as used herein, the terms "comprise" and/or "consist of..." specify the presence of stated features, integers, steps, operations, elements, and/or components, but do not preclude the presence or addition of one or more other features, integers, steps, operations, elements, components, and/or groups thereof.

Unless otherwise defined, all terms (including technical and scientific terms) used herein have the same meaning as commonly understood by one of ordinary skill in the art. It will be further understood that terms, such as those defined in commonly used dictionaries, should be interpreted as having a meaning that is consistent with their meaning in the context of the existing art and the present disclosure, and will not be interpreted in an idealized or overly formal sense unless expressly so defined herein.

Among the CBR services carried by the OSU, the STM-1 service is a relatively important service, and since the ODU carrying the OSU employs a time slot interleaving mechanism of more than 6 bytes, the frame header indication signal of STM-1 in the OSU is continuously present in the ODU of server layer. The ODU of server layer can support at most k levels of OSUs, which means that hundreds of frame header indication signals of STM-1 are present in the payload area of the ODU, which may result in an extended framing time for the ODU of server layer or other problems.

In view of this, as a first aspect of the present disclosure, there is provided a service transmission method which, as shown in FIG. 3, includes the following operations S110 to S140.

At operation S110, mapping a client to an optical service unit.

At operation S120, mapping the optical service unit to an optical data unit of server layer.

At operation S130, processing, according to a first preset rule, the optical data unit of server layer to generate data to be transmitted.

At operation S140, sending the data to be transmitted.

A client is mapped into an OSU which is further mapped and multiplexed into an ODU of server layer, and then the ODU of server layer is processed according to a first preset rule without adding a service frame header indication signal of the OSU into the ODU of server layer, which can avoid influencing framing of the ODU of server layer, reduce the time required by framing of the ODU of server layer, and further avoid other problems caused by the overlong framing time for ODU.

It should be noted that the transmission method provided in the first aspect of the present disclosure is applied to a source node.

As an optional implementation, a payload area of the optical data unit of server layer is divided into a fixed number of time slots with an interleaving granularity of N bytes, and N is a positive integer greater than 1.

As an optional implementation, processing, according to the first preset rule, the optical data unit of server layer includes: processing, according to the first preset rule, a payload area of the optical data unit of server layer.

By processing the payload area of the ODU of server layer, a pattern of the frame header indication signal in the payload area of the ODU of server layer can be changed to be different from the frame header indication signal in the ODU of server layer, so as to avoid influencing framing of the ODU of server layer, where the pattern of the frame header indication signal is a value of the frame header indication signal. Since only the payload area of the ODU of server layer is processed, an intermediate node can perform non-intrusive monitoring and scheduling on the ODU of server layer without performing a reverse operation of the first preset rule on the ODU of server layer.

In the present disclosure, the first preset rule is not particularly limited. As an optional implementation, processing, according to the first preset rule, the payload area of the optical data unit of server layer specifically includes: scrambling, according to a predetermined generating polynomial, the payload area of the optical data unit of server layer.

By means of scrambling, a distribution rule of 0 and 1 in the ODU of server layer can be changed, thereby changing a frame header pattern of the ODU of server layer.

Apparently, the present disclosure is not limited thereto. As another optional implementation of the present disclosure, processing, according to the first preset rule, the payload area of the optical data unit of server layer specifically includes: flipping each bit in the payload area of the optical data unit of server layer.

In this implementation, the NOT operation may change a pattern of the frame header indication signal in the payload area of the ODU of server layer to make it different from the frame header indication signal in the ODU of server layer, thereby avoiding influencing framing of the ODU of server layer.

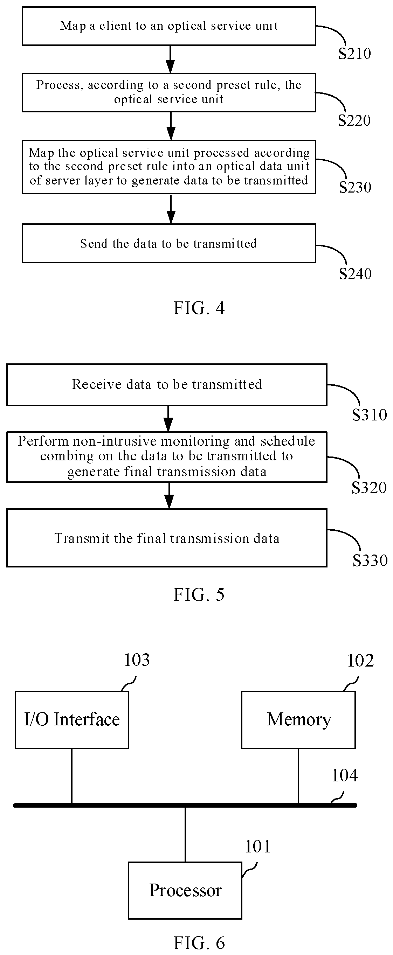

As a second aspect of the present disclosure, there is provided a service transmission method which, as shown in FIG. 4, includes the following operations S210 to S240.

At operation S210, mapping a client to an optical service unit.

At operation S220, processing, according to a second preset rule, the optical service unit.

At operation S230, mapping the optical service unit processed according to the second preset rule into an optical data unit of server layer to generate data to be transmitted.

At operation S240, sending the data to be transmitted.

The transmission method provided in the second aspect of the present disclosure is also applied to the source node.

In the present disclosure, before being mapped to the ODU of server layer, the OSU is processed according to a second rule, and then mapped into the ODU of server layer when the processing is completed. The transmission method provided in the second aspect also avoids the need of adding a service frame header indication signal of the OSU into the ODU of server layer, which can avoid influencing framing of the ODU of server layer, reduce the time required by framing of the ODU of server layer, and further avoid other problems caused by the overlong framing time for ODU.

In the present disclosure, processing, according to the second preset rule, the optical service unit includes: processing, according to the second preset rule, a payload area of the optical service unit or an area of the optical service unit excluding a frame alignment signal.

In the present disclosure, the specific manner of the second preset rule is not particularly limited, and as an optional implementation, processing, according to the second preset rule, the payload area of the optical service unit or the area of the optical service unit excluding the frame alignment signal specifically includes: scrambling, according to a predetermined generating polynomial, the payload area of the optical service unit or the area of the optical service unit excluding the frame alignment signal.

By scrambling the payload area of the optical service unit or the area of the optical service unit excluding the frame alignment signal, the OSU may carry a frame header indication signal with a pattern different from that in the ODU of server layer, so as to avoid influencing framing of the ODU of server layer.

Optionally, the optical data unit of server layer is divided into a fixed number of time slots with an interleaving granularity of N bytes, and N is a positive integer greater than 1.

The present disclosure may further provide a service transmission method. As shown in FIG. 5, the service transmission method includes the following operations S310 to S330.

At operation S310, receiving data to be transmitted, where the data to be transmitted is data to be transmitted generated in the method according to the first or second aspect of the present disclosure.

At operation S320, performing non-intrusive monitoring and scheduling on the data to be transmitted to generate final transmission data.

At operation S330, transmitting the final transmission data.

The service transmission method of the present disclosure is applied to an intermediate node.

As described above, an intermediate node can perform non-intrusive monitoring and scheduling on the ODU of server layer without performing a reverse operation of the first preset rule on the ODU of server layer.

As a third aspect of the present disclosure, there is provided an electronic device which, as shown in FIG. 6, includes: one or more processors 101; and a memory 102 having one or more programs stored thereon which, when executed by the one or more processors, cause the one or more processors 101 to implement the method according to the first or second aspect of the present disclosure.

Optionally, the electronic device may further include one or more I/O interfaces 103 connected between the one or more processors 101 and the memory 102, and configured to enable information interaction between the processor 101 and the memory 102.

The processor 101 is a device with a data processing capability, including but not limited to a central processing unit (CPU), or the like; The memory 102 is a device with a data storage capability, including but not limited to, a random access memory (RAM, more specifically SDRAM, DDR, etc.), a read-only memory (ROM), an electrically erasable programmable read-only memory (EEPROM) or a flash memory (FLASH). The I/O interface (read/write interface) 103 is connected between the processor 101 and the memory 102 to enable information interaction between the processor 101 and the memory 102, and includes, but is not limited to, a bus or the like.

In some embodiments, the processor 101, the memory 102, and the I/O interface 103 are interconnected via a bus 104, and further connected to other components of a computing device.

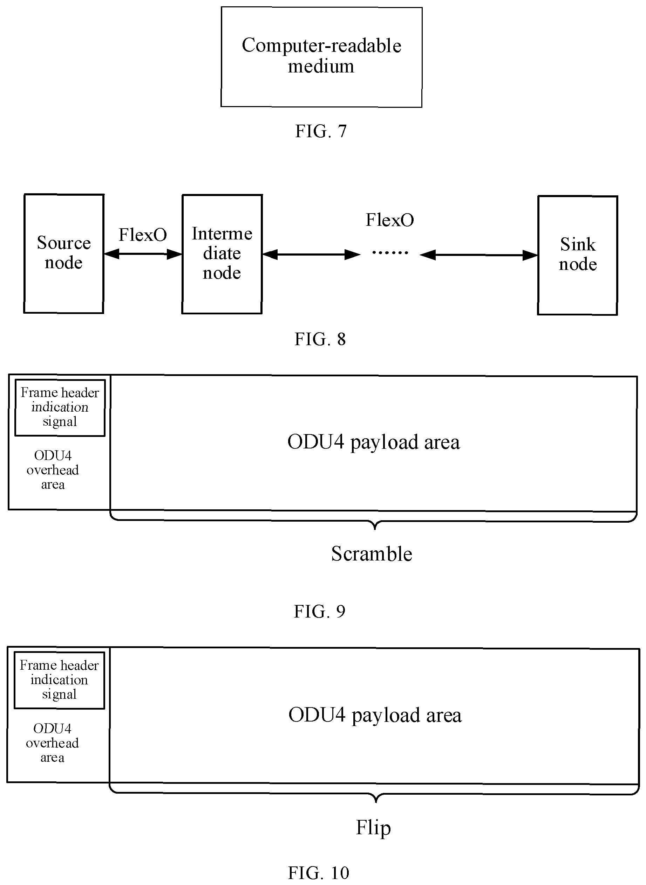

As a fourth aspect of the present disclosure, as shown in FIG. 7, there is provided a computer-readable medium storing a computer program thereon which, when executed by a processor, causes the method according to the first or second aspect of the present disclosure to be implemented.

### Embodiments

### First Embodiment

An application scenario of the first embodiment is as shown in FIG. 8, where a source node and a destination node transfer 500 STM-1 services through a 100G link.

The source node maps the 500 STM-1 services into 500 OSUs respectively, where the STM-1 services and the OSUs are in one-to-one correspondence. The 500 OSUs are then multiplexed into an ODU4 of server layer, where a new Payload Type (PT) value 0x23 is used to indicate that the ODU4 of server layer carries OSUs, and a payload area of the ODU4 of server layer adopts a 16-byte time slot division mode.

Since the ODU4 of server layer is sent through a flexible OTN (FlexO) interface, to prevent the frame header indication signals of STM-1 in the payload area of ODU4 from affecting framing of the ODU4 of server layer, the payload area of the ODU4 of server layer is scrambled according to a fixed generating polynomial, as shown in FIG. 9, and then the ODU4 of server layer is mapped into OTUC1 and sent through the FlexO interface. OTUC represents Completely standardized Optical Transport Unit-Cn.

An intermediate node demaps OTUC1 from the FlexO interface and demaps the ODU4 of server layer from OTUC1, and then performs non-intrusive monitoring and corresponding scheduling on ODU4 before sending ODU4 through another FlexO interface.

The destination node demaps OTUC1 from the FlexO interface and demaps the ODU4 of server layer from OTUC1, and then determines that the ODU4 of server layer carries OSU services based on the PT value, so that the payload area of the ODU4 of server layer is descrambled to demultiplex 500 OSUs from the ODU4 of server layer and demap the STM-1 services from the OSUs.

### Second Embodiment

An application scenario of the second embodiment is as shown in FIG. 8, where a source node and a destination node transfer 500 STM-1 services through a 100G link.

The source node maps the 500 STM-1 services into 500 OSUs respectively, where the STM-1 services and the OSUs are in one-to-one correspondence. The 500 OSUs are then multiplexed into an ODU4 of server layer, where a new PT value 0x23 is used to indicate that the ODU4 of server layer carries OSUs, and a payload area of the ODU4 of server layer adopts a 16-byte time slot division mode.

Since the ODU4 of server layer is sent through a FlexO interface, to prevent the frame header indication signals of STM-1 in the payload area of ODU4 from affecting framing of the ODU4 of server layer, each bit in the payload area of the ODU4 of server layer is flipped as shown in FIG. 10, and then the ODU4 of server layer is mapped into OTUC1 and sent through the FlexO interface.

An intermediate node demaps OTUC1 from the FlexO interface and demaps the ODU4 of server layer from OTUC1, and then performs non-intrusive monitoring and corresponding scheduling on ODU4 before sending ODU4 through another FlexO interface.

The destination node demaps OTUC1 from the FlexO interface and demaps the ODU4 of server layer from OTUC1, and then determines that the ODU4 of server layer carries OSU services based on the PT value, so that each bit in the payload area of the ODU4 of server layer is flipped to demultiplex 500 OSUs from the ODU4 of server layer and demap the STM-1 services from the OSUs.

### Third Embodiment

An application scenario of the third embodiment is as shown in FIG. 8, where a source node and a destination node transfer 500 STM-1 services through a 100G link.

The source node maps the 500 STM-1 services into 500 OSUs respectively, where the STM-1 services and the OSUs are in one-to-one correspondence, and the frame header indication signal of each OSU is different from that of the ODU of server layer.

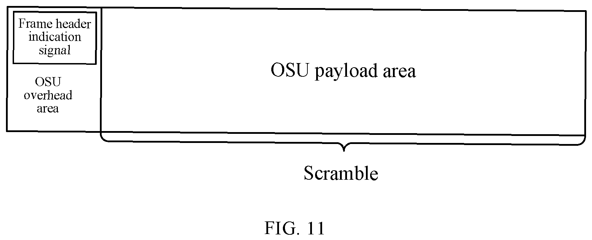

The payload area of each OSU service is scrambled according to a fixed generating polynomial, as shown in FIG. 11, and the scrambled OSU is multiplexed into the ODU4 of server layer, using a new PT value 0x23 to indicate that the ODU4 of server layer carries OSUs, and adopting a 16-byte time slot division mode in the payload area of the ODU4 of server layer. The ODU4 of server layer is mapped into OTUC1 and then sent through a FlexO interface.

An intermediate node demaps OTUC1 from the FlexO interface and demaps the ODU4 of server layer from OTUC1, and then demultiplexes OSUs from the ODU4 of server layer and performs non-intrusive monitoring and corresponding scheduling on the OSUs before sending the OSUs through another FlexO interface.

The destination node demaps OTUC1 from the FlexO interface and demaps the ODU4 of server layer from OTUC1, and then determines that the ODU4 of server layer carries OSU services based on the PT value, so that the OSUs is demapped from the ODU4 of server layer, and a payload area each OSU is descrambled to demap the STM-1 services from the OSUs.

Those of ordinary skill in the art will appreciate that all or some operations of the above described method, functional modules/units in the system and apparatus may be implemented as software, firmware, hardware, and suitable combinations thereof. In a hardware implementation, the division between the functional modules/units mentioned in the above description does not necessarily correspond to the division of physical components; for example, one physical component may have multiple functions, or one function or operation may be performed cooperatively by several physical components. Some or all physical components may be implemented as software executed by a processor, such as a CPU, a digital signal processor or microprocessor, or implemented as hardware, or implemented as an integrated circuit, such as an application specific integrated circuit. Such software may be distributed on a computer-readable medium which may include a computer storage medium (or non-transitory medium) and a communication medium (or transitory medium). As is well known to those of ordinary skill in the art, the term computer storage medium includes volatile and nonvolatile, removable and non-removable medium implemented in any method or technology for storing information, such as computer-readable instructions, data structures, program modules or other data. The computer storage medium includes, but is not limited to, an RAM, an ROM, an EEPROM, a flash or any other memory technology, a CD-ROM, a digital versatile disk (DVD) or any other optical disk storage, a magnetic cartridge, a magnetic tape, a magnetic disk storage or any other magnetic storage device, or may be any other medium used for storing the desired information and accessible by a computer. Moreover, it is well known to those ordinary skilled in the art that a communication medium typically includes a computer-readable instruction, a data structure, a program module, or other data in a modulated data signal, such as a carrier wave or other transport mechanism, and may include any information delivery medium.

The present disclosure has disclosed exemplary embodiments, and although specific terms are employed, they are used and should be interpreted merely in a generic and descriptive sense, not for purposes of limitation. In some instances, as would be apparent to one skilled in the art, features, characteristics and/or elements described in connection with a particular embodiment may be used alone or in combination with features, characteristics and/or elements described in connection with another embodiment, unless expressly stated otherwise. It will, therefore, be understood by those skilled in the art that various changes in form and details may be made therein without departing from the scope of the present disclosure as set forth in the appended claims.

## Claims

1. A service transmission method, comprising:
mapping a client to an optical service unit;
mapping the optical service unit to an optical data unit of server layer;
processing, according to a first preset rule, the optical data unit of server layer to generate data to be transmitted; and
sending the data to be transmitted.

2. The service transmission method according to claim 1, wherein a payload area of the optical data unit of server layer is divided into a fixed number of time slots with an interleaving granularity of N bytes, and N is a positive integer greater than 1.

3. The service transmission method according to claim 1 or 2, wherein processing, according to the first preset rule, the optical data unit of server layer comprises:
processing, according to the first preset rule, a payload area of the optical data unit of server layer.

4. The service transmission method according to claim 3, wherein processing, according to the first preset rule, the payload area of the optical data unit of server layer comprises:
scrambling, according to a predetermined generating polynomial, the payload area of the optical data unit of server layer.

5. The service transmission method according to claim 3, wherein processing, according to the first preset rule, the payload area of the optical data unit of server layer comprises:
flipping each bit in the payload area of the optical data unit of server layer.

6. A service transmission method, comprising:
mapping a client to an optical service unit;
processing, according to a second preset rule, the optical service unit;
mapping the optical service unit processed according to the second preset rule into an optical data unit of server layer to generate data to be transmitted; and
sending the data to be transmitted.

7. The service transmission method according to claim 6, wherein processing, according to the second preset rule, the optical service unit comprises:
processing, according to the second preset rule, a payload area of the optical service unit or an area of the optical service unit excluding a frame alignment signal.

8. The service transmission method according to claim 7, wherein processing, according to the second preset rule, the payload area of the optical service unit or the area of the optical service unit excluding the frame alignment signal comprises:
scrambling, according to a predetermined generating polynomial, the payload area of the optical service unit or the area of the optical service unit excluding the frame alignment signal.

9. The service transmission method according to any one of claims 6 to 8, wherein the optical data unit of server layer is divided into a fixed number of time slots with an interleaving granularity of N bytes, and N is a positive integer greater than 1.

10. An electronic device, comprising:
one or more processors; and
a memory having one or more programs stored thereon which, when executed by the one or more processors, cause the one or more processors to implement the service transmission method according to any one of claims 1 to 9.

11. A computer-readable medium storing a computer program thereon which, when executed by a processor, causes the service transmission method according to any one of claims 1 to 9 to be implemented.
